# EUROPÄISCHE PATENTSCHRIFT

(11) **EP 0 351 363 B1**
(45) Veröffentlichungstag und Bekanntmachung des Hinweises auf die Patenterteilung: **07.12.1994**
(21) Anmeldenummer: 89810498.9
(22) Anmeldetag: 30.06.1989
(51) Int. Cl.: C12H 1/04, A23L 2/30, B01D 61/14

(54) **Filtrationsverfahren, Verwendung von Stabilisierungsmitteln, Anlage für ein Filtrationsverfahren und Verfahren zum Betreiben der Anlage**
Filtration process, use of stabilization aids, plant for a filtration process and process for running this plant
Procédé de filtration, utilisation de stabilisants, installation pour un procédé de filtration et procédé pour faire fonctionner cette installation

(30) Priorität: 15.07.1988 CH 2717/88; 15.07.1988 CH 2725/88
(43) Veröffentlichungstag der Anmeldung: 17.01.1990
(73) Patentinhaber: Filtrox-Werk AG, CH-9001 St. Gallen (CH)
(72) Erfinder: Meier, Josef, CH-9032 Engelburg (CH)
(74) Vertreter: Hepp, Dieter

(56) Entgegenhaltungen:
- WO-A-86/05511
- WO-A-88/01139
- WO-A-89/00013
- WO-A-89/02707
- DE-A- 3 533 306
- FR-A- 2 231 407
- GB-A- 2 163 062
- US-A- 3 733 265
- US-A- 4 610 792
- L. NARZISS, "Abriss der Bierbrauerei", 1980, 4. Aufl., Ferdinand Enke Verlag, Stuttgart (DE); Seiten 324-327#
- HANDBUCH DER LEBENSMITTELTECHNOLOGIE, Frucht- und Gemüsesäfte, 1987, 2. Aufl., U. Schobinger (Hrsg.), Ulmer GmbH, Stuttgart (DE); Seiten 178-179#

## Beschreibung

Die Erfindung betrifft ein Verfahren gemäss Oberbegriff von Anspruch 1, die Verwendung von Stabilisierungsmitteln gemäss Anspruch 4, sowie eine Anlage zur Durchführung des Verfahrens gemäss Oberbegriff von Anspruch 5 und ein Verfahren zum Betreiben der Anlage gemäss Oberbegriff von Anspruch 7.

Bei bekannten Verfahren zur Filtration und Stabilisierung von Gerbstoffe und/oder Eiweisstoffe enthaltenden Medien, wie Bier, Wein oder Fruchtsaft, wird das Medium zunächst in einem Kiezelgur-Filter (z.B. Schichten- oder Kerzenfilter) gefiltert, sodann in einer Stabilisierungsanlage stabilisiert und schliesslich noch einmal gefiltert. Solche Verfahren sind entsprechend aufwendig und erfordern hohe Anlageninvestitionen.

Crossflow-Filtrationsverfahren sind zur Mikro- oder Ultrafiltration in den verschiedensten Bereichen der Technik bekannt und gebräuchlich und z.B. in der DE-OS-35 33 306 beschrieben. Bei der Crossflow-Technik werden Filtrations-Membranen nicht nur von der Unfiltrat- oder Feed-Seite zur Filtrat- bzw. Permeat-Seite durchströmt, sondern auf der Unfiltrat-Seite wird zusätzlich eine starke Querströmung entlang der Membran-Oberfläche erzeugt. Die Querströmung dient dazu, die Bildung einer gewissen Schicht aus zurückgehaltenem Trub auf der Unfiltratseite der Membrane zu verhindern. Durch das Umpumpen des Unfiltrats sollen die angereicherten Trubstoffe von der Membrane weggespült werden, bevor sie diese blockieren. Wenigstens soll die Dicke der Schicht aus abgetrennten Stoffen an der Membran-Oberfläche limitiert werden, um über längere Zeitspannen mit einem relativ konstanten Permeatfluss filtrieren zu können. Da jedoch die Trennung von Trub und Filtrat direkt an der Membran-Oberfläche unter Einfluss des Transmembrandrucks bzw. der Transmembranströmung stattfindet, kann die Anlagerung von abgetrennten Trubstoffen auch bei der Crossflow-Filtration nicht vollständig verhindert werden. Meist bildet sich relativ schnell, d.h. sofort bei Beginn der Filtration eine hauchdünne Deckschicht aus abgetrennten Trubstoffen, die selbst Filtereigenschaften besitzen kann. Derartige Deckschichten bilden sich sowohl bei Membranen für die Ultrafiltration mit einer Porengrösse von etwa 0,001 bis 1 µm als auch bei Membranen für die Mikrofiltration mit einer Porengrösse von etwa 0,1 bis 1 µm. Die Praxis zeigt dabei, dass bei feinporiger Oberfläche, d.h. also bei Ultrafiltration, die Membrane im Crossflow-Verfahren weniger verstopft, als bei grobporigen Membran-Oberflächen.

Bei vielen bekannten Verfahren zur Crossflow-Filtration wird deshalb periodisch rückgespült, d.h., dass die Membranen von der Filtratseite her kurzfristig während der Filtration entgegen der Filtrationsrichtung mit Druck beaufschlagt werden. Dies bewirkt, dass die Schicht auf der Unfiltratseite der Membrane teilweise abgelöst oder abgesprengt wird oder die Membranporen freigemacht werden. Dadurch lässt sich der Strömungswiderstand in Filtrationsrichtung bis zu einem gewissen Grad reduzieren.

Aus L. Narziss, Abriss der Bierbrauerei, 1980, 4. Aufl., ist es bekannt, unfiltriertem Bier zur Batch-Enzymierung ein Absorptionsmittel zuzugeben.

Aus dem Handbuch der Lebensmitteltechnologie, Frucht- und Gemüsesäfte, U. Schobinger (ed), 1987, 2. Aufl., Ulmer GmbH, Stuttgart, S. 178/179, ist der Einsatz von Filterhilfsmitteln bei der Anschwemmfiltration bekannt.

Der Erfindung liegt die Aufgabe zugrunde, die Nachteile des Bekannten zu vermeiden, insbesondere also ein vereinfachtes und wirtschaftlicheres Verfahren zur Filtration und Stabilisierung eines Gerbstoffe und/oder Eiweisstoffe enthaltenden flüssigen Mediums zu schaffen. Dies soll möglichst in einem Verfahrensschritt und unter Aufrechterhaltung einer hohen Filtrationsleistung erreicht werden, wobei vor allem auch die Regenerierbarkeit des Retentats bzw. des im Retentat enthaltenen Stabilisierungsmittels erreicht werden soll. Erfindungsgemäss wird dies in erster Linie gemäss Kennzeichen der unabhängigen Patentansprüche erreicht. Vor allem, wenn das Unfiltrat nur einen geringen Anteil an Trubstoffen enthält, lässt sich auf diese Weise in einem einzigen Verfahrensschritt das Medium sowohl filtrieren als auch stabilisieren, was erhebliche Einsparungen bei den Filtrationsanlagen ermöglicht und ausserdem den Verfahrensablauf verkürzen und vereinfachen kann. Vor allem hat sich gezeigt, dass durch das kontinuierliche Umpumpen des Unfiltrats bei der Crossflow-Membranfiltration das Stabilisierungsmittel gleichmässig mit dem Unfiltrat vermischt wird und mit der erforderlichen Verweilzeit mit dem Unfiltrat in Kontakt bleibt. Zweckmässig ist es dabei, wenn das Stabilisierungsmittel dem Unfiltrat kontinuierlich zudosiert wird. Dies kann vor allem durch Zudosieren in einem Arbeitstank oder aber durch Zudosieren zum Crossflow-Kreislauf realisiert werden. Vorteilhaft ergibt sich dabei, dass das Stabilisierungsmittel mit dem Unfiltrat im Kreislauf durch die Membranfilter der Crossflow-Filtrationsanlage gepumpt wird. Der Kreislauf kann dabei entweder direkt vom Ausgang der Filtrationsanlage über eine Pumpe zurück zu deren Eingang geschlossen werden. Es ist aber auch möglich, den Kreislauf über den Arbeitstank zu schliessen, d.h., dass Unfiltrat laufend vom Arbeitstank durch die Membranfilter gepumpt wird und das am Ausgang der Filtrationsanlage anstehende Retentat mit dem darin enthaltenden Stabilisierungsmittel zurück in den Arbeitstank gefördert wird. Durch die geringe Porengrösse derartiger Crossflow-Membranfilter (0,001 bis 1 µm bei Ultrafiltration bzw. etwa 0,1 bis 1 µm bei Mikrofiltration) wird zuverlässig verhindert, dass gebundene oder gefällte Gerbstoffe bzw. Eiweisstoffe in das Filtrat gelangen. Diese werden vielmehr mit dem Retentat bis zum Abschluss eines Filtrationszyklus auf der Unfiltrat-Seite der Membranfilter umgepumpt.

Besonders bewährt hat sich zum Einsatz bei der Erfindung Polyvinyl-Polypyrrolidon (PVPP).

Sofern das Unfiltrat hohe Trubstoff-Anteile enthält, lässt sich die Filtrationsleistung der Membranfilter erhöhen, wenn den Membranen ein körniges oder faseriges Filterhilfsmittel zum Schutz der Membranporen vor Verstopfung durch Trubstoffe zugeführt wird.

Unter "körnig" werden dabei solche Filterhilfsmittel verstanden, die aus regelmässig oder unregelmässig geformten Teilchen bestehen, die sich weder im Unfiltrat lösen noch unter dem Einfluss des Transmembran-Drucks miteinander verkleben oder anderweitig kompaktiert werden. Derart aus körnigen Teilchen bestehende Filterhilfsmittel werden erfindungsgemäss trotz der Crossflow-Querströmung entlang der Membran-Oberfläche abgelagert und können so die Bildung von durchgehenden Deckschichten aus Trub-Stoffen verhindern.

Das Filterhilfsmittel kann vorteilhaft als Deckschicht direkt auf die Membran-Oberfläche aufgebracht werden. Dadurch werden die Poren der Membran-Oberfläche zuverlässig gegen das Verstopfen durch Trubstoffe geschützt. Die Deckschicht soll dabei eine Schichtdicke von 1 bis 20 µm, vorzugsweise von 1 bis 8 µm aufweisen; sie stellt also keine Filterschicht im konventionellen Sinne, sondern eine Schutzschicht für die eigentliche Membran-Filterschicht dar.

Das Filterhilfsmittel kann vor dem Beginn des Filtrationsvorgangs auf die Membran-Oberfläche aufgebracht werden. Dadurch wird eine Deckschicht erzeugt, die ausschliesslich aus dem Filterhilfsmittel besteht und frei ist von Beimengungen aus Trubstoffen. Dies lässt sich erreichen, wenn zum Anfahren eines Filtrations-Zyklus zunächst die Membran mit einem Medium überströmt wird, das keine wesentlichen Anteile von Trubstoffen enthält, wenn zur Bildung der Deckschicht dem Medium Filterhilfsmittel beigegeben wird, und wenn sodann das Unfiltrat der Membran zugeführt wird. Eine solche Deckschicht lässt sich einfach dadurch erzeugen, dass der Filtrations-Zyklus mit Wasser angefahren wird, dem Filterhilfsmittel beigegeben wird. Sobald die Deckschicht erzeugt ist, kann das Wasser als Vorlauf aus dem Filter gedrückt und Unfiltrat zugeführt werden.

Besonders rationell lässt sich ein solcher Filtrations-Zyklus auch anfahren, wenn der Filtrations-Zyklus mit dem Filtrat eines früheren Filtrations-Zyklus eingeleitet wird und diesem Filtrat das Filterhilfsmittel beigegeben wird. Die Deckschicht wird also durch Filtrat selbst erzeugt, das quasi noch einmal filtriert wird und dabei die Deckschicht aufbaut. Dabei kann dann relativ schnell neues Unfiltrat zugegeben werden, so dass der Filtrations-Zyklus schnell und ohne Unterbrechung beginnen kann.

In vielen Anwendungsfällen kann es vorteilhaft sein, wenn dem Unfiltrat Filterhilfsmittel beigegeben wird. Sofern aufgrund der im Unfiltrat vorhandenen Trubstoffe keine ausgeprägte Tendenz zur schnellen Bildung von Trubstoff-Deckschichten besteht, kann der Filtrations-Zyklus auf diese Weise angefahren werden. Dabei bildet sich dann eine Deckschicht des Filterhilfsmittels, in die gewisse Anteile von Trubstoffen eingelagert sind. Alternativ ist es jedoch auch möglich, nach der Bildung einer Deckschicht aus Filterhilfsmittel nach dem Anfahren mit Wasser oder Filtrat zusätzlich dem Unfiltrat laufend oder diskontinuierlich Filterhilfsmittel beizugeben. Die Teilchen des Filterhilfsmittels stören allfällige Trubstoff-Schichten, so dass sie durchlässiger werden. Ausserdem verhindern die körnigen Filterhilfsmittel die Bildung kompakter Schichten, so dass die Crossflow-Querströmung Trubstoff-Anlagerungen leichter lösen kann.

Der Schutz der Membran-Poren vor Verstopfung wird besonders zuverlässig gewährleistet, wenn Filterhilfsmittel mit einer Korngrösse aufgebracht wird, die grösser ist, als die Porengrösse der Filter-Membran. Besonders bewährt hat sich eine Korngrösse von 1 bis 80 µm, wobei sich durch entsprechende Wahl der Korngrössenverteilung, z.B. 60% bis 80% der Teilchen im Bereich von 1 µm bis 4 µm, in diesem Bereich das Filterhilfsmittel im Hinblick auf das zu filtrierende Medium und die darin enthaltenen Trubstoffe optimieren lässt.

Als ein derartiges Filterhilfsmittel lässt sich vor allem auch ein entsprechend "körniges" Stabilisierungsmittel, wie z.B. PVPP, einsetzen. Dadurch werden bei Gerbstoffe- und Eiweisstoffe enthaltenden Medien zwei wesentliche, vorteilhafte Effekte gleichzeitig erreicht: Durch Bildung einer Deckschicht aus dem Filterhilfsmittel bzw. Stabilisierungsmittel wird die Filtratleistung wesentlich erhöht und ein Verstopfen der Membran-Poren verhindert. Ausserdem wird der an sich bekannte Stabilisierungseffekt genutzt, d.h. dass im Unfiltrat enthaltene Gerbstoffe oder Eiweisstoffe durch das Stabilisierungsmittel gebunden werden.

Die Erfindung ermöglicht damit z.B. die Filtration und Stabilisierung von Bier in einem Crossflow-Membranfilter ohne Vorfiltration in einem konventionellen Kieselgur-Filter (z.B. in "Brauerei-Rundschau Jg. 90 Nr. 1/2, Jan.-Feb. 1979", S. 55-59 und 67-75 beschrieben). Durch die gleichzeitige Stabilisierung werden erhebliche Einsparungen beim Bau und Betrieb von Filtrations- und Stabilisierungsanlagen erreicht.

Für bestimmte Anwendungsfälle kann es auch vorteilhaft sein, ein Gemisch aus verschiedenen Filterhilfsmitteln einzusetzen.

Besonders vorteilhaft lässt sich dies erreichen, wenn wenigstens zwei Filterhilfsmittel nacheinander eingebracht werden.

Bei der Filtration mit einer Membran mit einem Porendurchmesser von höchstens 0,5 µm und vorzugsweise etwa 0,2 µm lassen sich in der Praxis besonders gute Ergebnisse erzielen, wenn die Membran-Oberfläche vom Unfiltrat mit einer Strömungsgeschwindigkeit von etwa 3 bis 6 m/s überströmt wird. Diese Strömungsgeschwindigkeit erlaubt einerseits noch die Ausbildung ausreichender Deckschichten aus Filterhilfsmittel bzw. Stabilisierungsmittel. Anderseits ist die Querströmung an der Oberfläche der Filterhilfsmittel-Deckschicht stark genug, um Turbulenzen zu erzeugen und Ablagerungen von Trubstoffen, ggf. mit einzelnen Teilchen des Filterhilfsmittels bzw. des Stabilisierungsmittels, zu lösen und die Durchlässigkeit der Deckschicht zu erhalten.

Bei der Mikrofiltration bauen sich dabei zuverlässig Filterhilfsmittel-Deckschichten in einer Dicke von etwa 1 bis 8 µm auf, wenn der Transmembrandruck, d.h. der Differenzdruck zwischen Zufuhr-, d.h. Unfiltrat-Seite, und Abfuhr-, d.h. Filtrat-Seite der Membran grösser ist als 0,5 bar und vorzugsweise etwa 1 bis 6 bar beträgt.

Bei der Ultrafiltration haben sich Transmembranedrücke bewährt, die grösser sind als 2 bar und vorzugsweise 3 bis 8 bar betragen.

Während also beim Stand der Technik meist davon ausgegangen wurde, dass der Transmembrandruck bei Mikrofiltration 3 bar und bei Ultrafiltration 6 bar nicht übersteigen darf, um ein Verstopfen der Poren mit Trubstoffen zu vermeiden, wird durch die erfindungsgemässe Ausbildung der Deckschichten aus Filterhilfsmittel bzw. Stabilisierungsmittel die Anwendung wesentlich höherer Transmembrandrücke ermöglicht, womit sich die Filtratleistung steigern lässt.

Bei einer Anlage zur Durchführung eines Crossflow-Filtrations-Verfahrens gemäss Anspruch 5 lässt sich das erfindungsgemässe Verfahren besonders wirksam anwenden, wenn die Membranen einen freien Innendurchmesser zur Aufnahme des Unfiltrats von 0,5 mm bis 30 mm aufweisen. Die Störmungsverhältnisse in zylindrischen Membranen mit einem solchen Innendurchmesser erlauben besonders wirksame Ausbildung von Deckschichten aus Filterhilfsmittel bei gleichzeitiger Störung und Lösung von Trubstoff-Schichten durch Querströmung und Turbulenzen.

Da dünne Deckschichten mit einer Schichtdicke von einigen µm, die aus Stabilisierungsmittel bzw. aus Filterhilfsmittel bestehen oder wenigstens einen hohen Anteil davon enthalten, weder in die Membran-Poren eindringen noch kompakte Schichten über den Poren bilden, lassen sie sich zur Reinigung der Membran relativ einfach lösen. Dieses Lösen, z.B. nach Abschluss eines Filtrationsprozesses, lässt sich durch Spülen, Erhöhen oder Umkehr der Ueberströmgeschwindigkeit erreichen oder auch durch Rückspülung, indem eine gewisse Filtratmenge von der Filtratseite zurück in die Unfiltratseite gedrückt wird. Wenn der Trub bzw. das Konzentrat abgeführt wird, kann das Filterhilfsmittel und/oder das Stabilisierungsmittel theoretisch ebenfalls mit aus der Anlage entfernt werden. Vorteilhaft ist es jedoch, wenn das Stabilisierungsmittel im Filtersystem zurückgehalten und z.B. bei der Membranreinigung mitgespült und regeneriert, d.h. insbesondere mit heisser Lauge behandelt und anschliessend sterilisiert wird. Auf diese Weise lässt sich vor allem PVPP als Stabilisierungsmittel gleichzeitig mit der Membranreinigung regenerieren, was wirtschaftliche Wiederverwendung erlaubt. Alternativ kann selbstverständlich auch das zurückgehaltene Filterhilfsmittel in einen separaten Behälter oder in den Arbeitstank der Crossflow-Filtrationsanlage abgeführt und dort gereinigt und regeneriert werden.

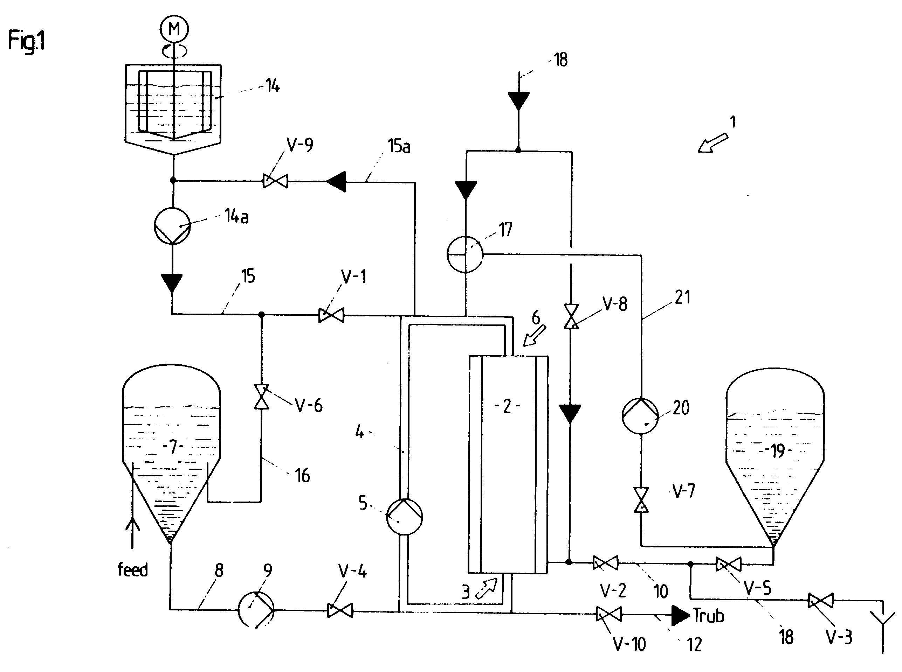

Die Erfindung ist im folgenden in Ausführungsbeispielen anhand der Zeichnungen näher erläutert. Es zeigen:
- Figur 1: Ein schematisches Fliess-Schema einer Filtrationsanlage mit den Merkmalen der Erfindung,
- Figur 2: die schematische Darstellung von Filtrationsmembranen,
- Figur 3: eine Draufsicht auf die Membran-Anordnung gemäss Figur 2,
- Figur 4 und 4a: den schematischen Querschnitt durch eine Filtrations-Membran mit einer Deckschicht aus Stabilisierungsmittel und
Gemäss Figur 1 weist eine Filtrations-Anlage 1 ein Crossflow-Filter 2 auf, dessen Ausgang 3 durch eine Rückführleitung 4 mit einer Pumpe 5 mit dem Filter-Eingang 6 verbunden ist. Aus einem Arbeitstank 7 wird ein zu filtrierendes Medium, im vorliegenden Fall Bier, über eine Pumpe 9 der Rückführleitung 4 und dem Filter 2 zugeführt. Das im Filter 2 gewonnene Filtrat wird über eine Leitung 10 dem Puffertank 19 zugeführt. Die am Filterausgang 3 anfallenden Trubstoffe, d.h. vor allem Hefe, werden über Leitung 12 abgeführt. Ein Dosierbehälter 14 zur Beimengung von PVPP als Stabilisierungsmittel ist durch eine Leitung 15 mit Pumpe 14a an die Rückführleitung 4 angeschlossen. Selbstverständlich lassen sich auch (je nach Medium) andere Stabilisierungsmittel zu-dosieren, wobei die Regenerierbarkeit gewahrt bleiben soll.

Der Dosierbehälter 14 ist ausserdem über eine Leitung 16 mit dem Arbeitstank 7 verbunden.

Die Rückführleitung 4 ist über einen Mehrwege-Hahn 17 mit einer Zuführleitung 18 verbindbar, durch die Wasser oder auch Reinigungsflüssigkeit, wie z.B. Lauge und Säure, von nicht dargestellten Zufuhreinrichtungen in die Rückführleitung 4 und das Filter 2 eingebracht werden kann.

Zum Anfahren eines Filtrations-Zyklus wird der Mehrwege-Hahn 17 in die dargestellte Stellung gebracht, so dass der Rückführleitung 4 und dem Filter 2 Frischwasser zugeführt wird. Ausserdem wird die Pumpe 14a betätigt und Ventil V-1 geöffnet, so dass Stabilisierungsmittel in die Rückführleitung 4 dosiert wird. Durch die Pumpe 5 wird das mit Stabilisierungsmittel angereicherte Frischwasser durch das Filter 2 gefördert. Das Frischwasser tritt durch die Filtermembranen im Filter 7 und baut dabei an der Membran-Oberfläche eine Deckschicht aus PVPP auf, wie nachstehend noch beschrieben wird. Das "gefilterte" Wasser tritt bei geöffneten Ventilen V-2 und V-3 über Leitung 10 und Leitung 18 aus und wird abgeführt. Sobald sich im Filter 2 die gewünschte Deckschicht aufgebaut hat, wird der Mehrwege-Hahn 17 geschlossen. Ausserdem werden das Ventil V-1 geschlossen und das Ventil V-4 geöffnet sowie die Pumpe 9 betätigt. Dadurch wird Unfiltrat aus dem Arbeitstank 7 über Rückführleitung 4 in das Filter 2 gefördert. An der Leitung 10 steht Filtrat an. Sobald der Vorlauf von Wasser und mit Wasser vermischtem Filtrat über Leitung 18 ausgeschoben ist, wird Ventil V-3 geschlossen und Ventil V-5 geöffnet, so dass das stabilisierte und filtrierte Bier in den Puffertank 19 gefördert wird.

Der am Filterausgang 3 anfallende Trub, d.h. Hefe, kann über die Leitung 12 abgeführt werden.

Um dem Unfiltrat ebenfalls Stabilisierungsmittel zuzudosieren, ist Ventil V-6 geöffnet, so dass das Stabilisierungsmittel direkt in den Arbeitstank 7 gefördert wird. Alternativ könnte auch Ventil V-1 geöffnet werden, um Stabilisierungsmittel direkt der Rückführleitung 4 und dem Filter 2 zuzuführen. Wesentlich ist dabei, dass das Stabilisierungsmittel in ausreichender Menge und mit der erforderlichen Verweilzeit vor der Filtration mit dem Unfiltrat in Kontakt ist, um Gerbstoffe bzw. Eiweisstoffe zu binden oder zu fällen.

Sofern mit einem oder mehreren weiteren Stabilisierungsmitteln gearbeitet werden soll, können zusätzliche Dosierbehälter analog dem Dosierbehälter 14 sowie die entsprechenden Verbindungsleitungen zum Arbeitstank 7 und/oder zum Filter 2 vorgesehen werden. Aus Gründen der Uebersichtlichkeit ist beim Ausführungsbeispiel nur ein Dosierbehälter 14 für PVPP dargestellt.

Vorstehend wurde das Anfahren eines Filtrations-Zyklus mit Wasser beschrieben. Ersichtlicherweise treten dabei Filtratverluste im Vorlauf auf. Die Anlage lässt sich deshalb alternativ auch mit dem im Puffertank 19 gesammelten Filtrat anfahren. Dazu muss beim Anfahren lediglich das Ventil V-7 geöffnet, Pumpe 20 betätigt und der Mehrwege-Hahn 17 in eine Position gebracht werden, in der Leitung 21 mit dem Filter-Eingang 6 verbunden wird. Wie beim Anfahren mit Wasser kann dabei Stabilisierungsmittel von einem oder mehreren der Dosierbehälter 14 zum Aufbau einer Deckschicht aus Stabilisierungsmittel an der Membran-Oberfläche des Filters 2 zudosiert werden. Da das aus dem Puffertank 19 zurückgepumpte Filtrat keine Trubstoffe enthält, besteht die derart auf der Oberfläche der Filtermembranen im Filter 2 gebildete Deckschicht ausschliesslich aus Filterhilfsmittel und ist frei von Trubstoffen. Im Gegensatz zum Anfahren mit Wasser kann beim Anfahren mit Filtrat das Ventil V-5 geöffnet bleiben, so dass der Filtrations-Zyklus durch Zuführen von Unfiltrat mittels Pumpe 9 nach Abschalten der Pumpe 20 kontinuierlich eingeleitet werden kann.

Bei Beendigung eines Filtrations-Zyklus kann z.B. zunächst durch Zuführen von Wasser über den Mehrwege-Hahn 17 das Filtrat bzw. der Nachlauf aus dem Filter 2 über Leitung 10 aus geschoben werden. Anschliessend kann das Filter 2, z.B. durch Oeffnen von Ventil V-8, mit Wasser rückgespült werden und das im Filter 2 befindliche Stabilisierungsmittel kann mit dem Retentat durch Oeffnen des Ventils V-10 über Leitung 12 aus der Anlage abgeführt werden.

Besonders vorteilhaft lässt sich jedoch die Anlage durch Zufuhr von Reinigungsflüssigkeit, z.B. Heisslauge, über Leitung 18, Mehrweg-Hahn 17 und/oder Ventil 8 reinigen, wobei das im Filter 2 befindliche PVPP gleichzeitig mitgereinigt und regeneriert wird. Nach dem Reinigen und Spülen kann durch Zuführung von Frischwasser über das Ventil V-8 das PVPP bei geöffnetem Ventil V-9 über Leitung 15a aus dem Filter 2 in den Dosierbehälter 14 gedrückt werden. Die Reinigung und Regenerierung des PVPP kann also in der Anlage selbst erfolgen und das regenerierte PVPP steht im Dosierbehälter 14 für nachfolgende Filtrations-Zyklen zur Verfügung. Dies kann in vielen Anwendungsfällen wirtschaftlicher sein, als das Ablassen des Stabilisierungsmittels über Leitung 12 in einen separaten Reinigungs- und Regenerationsbehälter (nicht dargestellt).

Statt der dargestellten Verbindung von Filter-Ausgang 3 und Filter-Eingang 6 mittels Rückführleitung 4 kann die Rückführung aus dem Filter 2 selbstverständlich auch zum Arbeitstank 7 geführt sein. Das Unfiltrat wird dann in bekannter Weise vom Arbeitstank 7 durch das Filter 2 gepumpt und gelangt dann zurück in den Arbeitstank 7. Zum Reinigen und Regenerieren des Stabilisierungsmittels kann auf gleiche Weise das Retentat (Trubstoffe vermischt mit Stabilisierungsmittel) zurück in den Arbeitstank 7 gefördert und dort mit bekannten Reinigungs- und Regenerierungsmitteln, z.B. Heisslauge, Säure und Frischwasser, behandelt werden. Dabei lösen sich die Trubstoffe auf, so dass sie anschliessend durch das Filter 2 sowie Leitung 10 und 18 zusammen mit der Regenerierungsflüssigkeit ausgeschoben werden können. Das Stabilisierungsmittel wird im Filter 2 zurückgehalten und kann anschliessend entweder in der beschriebenen Weise in den Dosierbehälter 14 zurückgepumpt oder über Leitung 12 abgeführt werden.

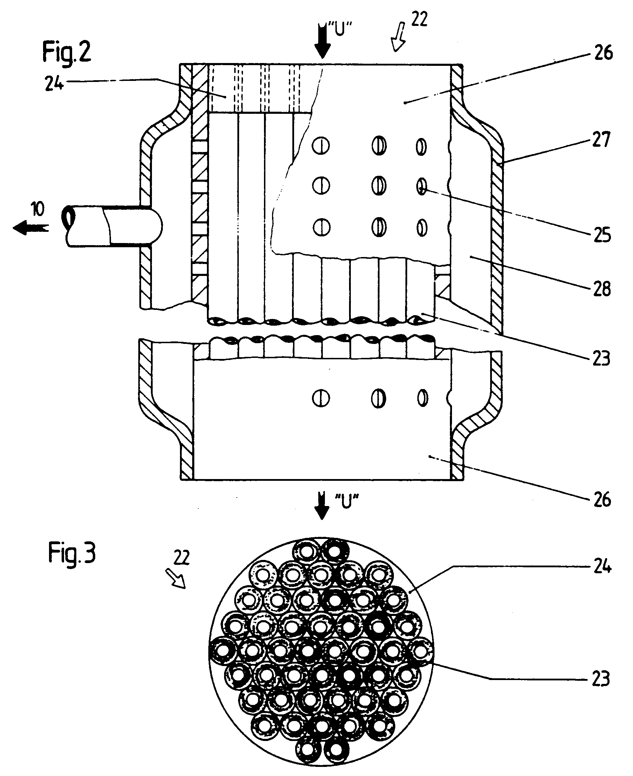

Figur 2 und 3 zeigen schematisch eines der im Filter 2 vorgesehenen Filtermodule 22, das eine Vielzahl von Filter-Rohren 23 aufweist. Die Filter-Rohre 23 sind innen mit mikroporösen Membranen aus Polysulfon versehen. Es lassen sich auch andere bekannte Membranen aus Polypropylen, Keramik etc. einsetzen. Derartige Filtermodule 22 sind an sich bekannt und werden z.B. von der Firma Stork-Wafilin, Gorredijk, Niederlande angeboten. Die einzelnen Filter-Rohre 23 sind an ihren beiden Enden in Kunststoff-Endstücken 24 vergossen. Selbstverständlich ist auch eine Halterung in Gummidichtungen oder anderen Dichtungselementen möglich. Die Kunststoff-Endstücke 24 liegen dichtend an einem mit Austrittsöffnungen 25 versehenen Mantel-Rohr 26 an. Das Mantel-Rohr 26 ist in einem Sammelrohr 27 angeordnet, so dass das durch die Membran der Filter-Rohre durchtretende Filtrat durch die Austrittsöffnungen 25 in einen durch das Sammelrohr 27 begrenzten Ringraum 28 geleitet wird und von dort der Auslassleitung 10 (Figur 1) zugeführt wird. Das Unfiltrat durchströmt dabei das Filtermodul 22 in Richtung der Pfeile "U".

In der Praxis lassen sich selbstverständlich je nach Leistungsbedarf der Filtrationsanlage beliebig viele Filter-Module 22 parallel und/oder in Serie anordnen. Dabei kann z.B. auch ein gemeinsames Sammelrohr für eine Mehrzahl von Filter-Modulen 22 vorgesehen sein oder es werden mehrere der Sammelrohre 27 parallel an Zufuhr- und Abfuhrleitungen angeschlossen, die dann den Filtereingang 6 bzw. den Filterausgang 3 gemäss Figur 1 bilden. In gleicher Weise lassen sich die Filtrat-Auslässe mehrerer Sammelrohre 27 zusammenfassen.

Aus der Draufsicht auf ein Filtermodul 22 gemäss Figur 3 ist die regelmässige Anordnung der Filter-Rohre 23 in den Endstücken 24 erkennbar.

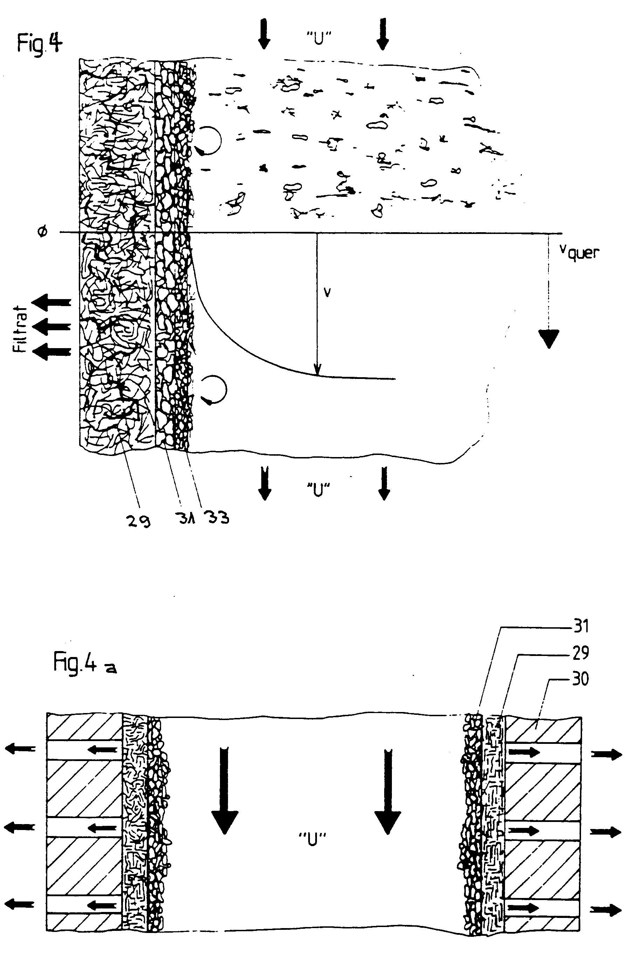

Figur 4 zeigt ein Ausführungsbeispiel, bei dem auf die mikroporöse Polysulfon-Membran 29 gemäss vorstehend beschriebenem Verfahrensablauf eine Schicht 31 aus PVPP aufgebracht ist. Durch die Schicht 31 werden die Membran-Poren vor dem Verstopfen geschützt, wobei durch die hohe Porosität der mikrofeinen PVPP-Schicht hohe Durchfluss-Raten gewährleistet werden.

Auf der Schicht 31 bildet sich eine Schicht 33, die aus Trubstoffen und in die Trubstoff-Schicht eingelagerten PVPP-Partikeln besteht. Das PVPP wird dem Unfiltrat in beschriebener Weise laufend zugegeben.

Durch den Einsatz von PVPP beim Ausführungsbeispiel tritt bei der Filtration gerbstoffhaltiger Medien der bekannte Stabilisationseffekt ein, d.h. Polyphenole werden an das PVPP gebunden. Ausserdem bewirkt das PVPP im Trub einen zusätzlichen Schutz für die Poren der Membran 29. Und schliesslich bewirken die im Unfiltrat enthaltenen und in der Trubstoffschicht 33 angeschwemmten PVPP-Teilchen eine nachhaltige Störung dieser Schicht 33: einmal werden durch die PVPP-Teilchen quasi Kanäle in der Schicht 33 geschaffen, durch welche Unfiltrat zur Membran 29 strömen kann. Auf der andern Seite werden durch hervorstehende PVPP-Teilchen Wirbel erzeugt, die eine Störung der Schicht 33 bewirken. Dadurch wird zuverlässig verhindert, dass die Schicht 33 eine geschlossene, die Filtratleistung wesentlich mindernde Form annimmt.

Durch die erfindungsgemässe Verwendung von Stabilisierungsmitteln lassen sich mit Membranfiltern derartige Filterleistungen erreichen, dass sich z.B. Bier oder Fruchtsaft ohne jede Vorfiltration in einem konventionellen Kieselgurfilter (z.B. Kerzenfilter oder Schichtenfilter) in einem einzigen Arbeitsgang filtrieren und stabilisieren lässt.

## Patentansprüche

1. Verfahren zur Filtration und Stabilisierung eines flüssigen Mediums, insbesondere von Bier, Wein oder Fruchtsaft, welches Medium (1) durch Filtrierung entfernbare Trubstoffe, sowie (2) Gerbstoffe und/oder Eiweissstoffe enthält, die durch Adsorbtion mittels eines Stabilisierungsmittels aus dem Medium entfernbar sind, dadurch gekennzeichnet, dass das Medium in einem Verfahrensschritt gefiltert und stabilisiert wird, wobei
(a) das Medium in Anwesenheit eines Stabilisierungsmittels im Kreislauf durch ein Crossflow-Membran-Filter gepumpt wird, wobei
(b) PVPP und/oder ein anderes Stabilisierungsmittel als Stabilisierungsmittel und zugleich Filterhilfsmittel entweder dem Medium vor oder während der Zirkulation im Crossflow-Filter zudosiert wird und/oder in das Crossflow-Filter vor dem Anfahren der Filtration eingebracht wird,
(c) und wobei als regenerierbares Retentat aus dem Crossflow-Filter das Stabilisierungsmittel und die Trubstoffe abgeführt werden .

2. Verfahren nach Anspruch 1, dadurch gekennzeichnet, dass als Stabilisierungsmittel PVPP zugeführt wird.

3. Verfahren nach Anspruch 1, dadurch gekennzeichnet, dass als Stabilisierungsmittel ein Eiweiss fällendes und/oder Eiweiss bindendes Mittel, insbesondere Kieselgel zugeführt wird.

4. Verwendung eines gerbstoffbindenden Stabilisierungsmittels mit einer Teilchengrösse von 1 µm bis 300 µm, insbesondere Verwendung von Polyvinyl-Polypyrrolidon zur Beimengung als Stabilisierungsmittel und gleichzeitig als Filterhilfsmittel zum Unfiltrat bei der Crossflow-Membranfiltration von gerbstoffhaltigen Medien, insbesondere von Bier, Wein oder Fruchtsaft im Ultra- oder Mikrofiltrationsbereich, wobei das im wesentlichen ungefilterte Unfiltrat in einem Verfahrensschritt gefiltert und stabilisiert wird.

5. Anlage zur Durchführung eines Stabilisations- und Filtrationsverfahrens nach einem der Ansprüche 1 bis 4, gekennzeichnet durch ein Crossflow-Filter (2) mit einer Mehrzahl von Filtrations-Membranen (23), die vom Unfiltrat durchströmt werden, einer Anordnung (26, 27) zum Abführen des Filtrats, welche die Membranen umgibt, sowie einer Leitungs- und Pumpanordnung (4, 5) zum Umpumpen des Unfiltrats im Kreislauf durch die Membranen, welche Anordnung beidseitig an die Membranen (22 bzw. 23) angeschlossen ist, und wenigstens einen Arbeitstank (7) von dem ein ungefiltertes und unstabilisiertes Getränk, insbesondere Bier, Wein oder Fruchtsaft unmittelbar dem Crossflow-Filter (2) zuführbar ist, sowie durch eine Einrichtung (14, 14a) zum Beimengen von Stabilisierungsmittel und/oder Filterhilfsmittel zum Unfiltrat.

6. Anlage nach Anspruch 5, dadurch gekennzeichnet, dass die Membranen (23) zylindrisch sind und einen freien Innendurchmesser zur Aufnahme des Unfiltrats von 0,5 mm bis 30 mm aufweisen.

7. Verfahren zum Betreiben einer Anlage gemäss Anspruch 5 oder 6, dadurch gekennzeichnet, dass bei der periodischen Membranereinigung insbesondere durch Spülen, Reinigung mit heisser Lauge und Sterilisieren das Stabilisierungsmittel in der Anlage gleichzeitig gereinigt und regeneriert wird.

8. Verfahren nach Anspruch 7, dadurch gekennzeichnet, dass das Stabilisierungsmittel zusammen mit einer Reinigungsflüssigkeit im Kreislauf auf der Unfiltratseite durch die Membranen umgepumpt und dabei gereinigt bzw. regeneriert wird.

9. Verfahren zum Betreiben einer Anlage gemäss Anspruch 5 oder 6, dadurch gekennzeichnet, dass das Stabilisierungsmittel zum Reinigen oder Regenerieren aus dem Membrane-Kreislauf in einen Reinigungsbehälter gefördert und dort behandelt wird.

10. Verfahren zum Betreiben einer Anlage gemäss Anspruch 5 oder 6, dadurch gekennzeichnet, dass das Stabilisierungsmittel zum Reinigen oder Regenerieren aus dem Membrane-Kreislauf in den Arbeitstank gefördert und dort gereinigt und regeneriert, insbesondere mit Lauge oder Säure behandelt wird.

## Claims

1. A method of filtering and stabilising a liquid medium, in particular beer, wine or fruit juice, which medium contains (1) clouding substances which can be removed by filtering, and (2) tannins and/or albumins which can be removed from the medium by adsorption by means of a stabilising agent, characterised in that the medium is filtered and stabilised in one method step, wherein
(a) the medium is pumped in circulation through a crossflow membrane filter in the presence of a stabilising agent, wherein
(b) PVPP and/or another stabilising agent is added as a stabilising agent and at the sane time as a filter aid agent either to the medium prior to or during the circulation in the crossflow filter and/or is introduced into the crossflow filter before the beginning of the filtering operation, and
(c) wherein the stabilising agent and the clouding substances are removed as regeneratable retentate from the crossflow filter.

2. A method according to claim 1 characterised in that PVPP is added as the stabilising agent.

3. A method according to claim 1 characterised in that an agent which precipitates and/or binds albumin, in particular silica gel, is added as the stabilising agent.

4. Use of a tannin-binding stabilising agent with a particle size of 1 µm to 300 µm, in particular the use of polyvinyl polypyrrolidone, for admixing as a stabilising agent and at the same time as a filter aid agent to the unfiltrate in the crossflow membrane filtration of tannin-bearing media, in particular beer, wine or fruit juice, in the ultra- or microfiltration range, wherein the substantially unfiltered unfiltrate is filtered and stabilised in one method step.

5. An installation for carrying out a stabilisation and filtration method according to one of claims 1 to 4 characterised by a crossflow filter (2) with a plurality of filtration membranes (23) through which the unfiltrate flows, an arrangement (26, 27) for removal of the filtrate, which surrounds the membranes, and a conduit and pump arrangement (4, 5) for pumping the unfiltrate in circulation through the membranes, which arrangement is connected at both sides to the membranes (22 and 23 respectively), and at least one working tank (7) from which an unfiltered and unstabilised drink, in particular beer, wine or fruit juice, can be fed directly to the crossflow filter (2), and further characterised by a means (14, 14a) for adding stabilising agent and/or filter aid agent to the unfiltrate.

6. An installation according to claim 5 characterised in that the membranes (23) are cylindrical and have a free inside diameter for receiving the unfiltrate of from 0.5 mm to 30 mm.

7. A method of operating an installation according to claim 5 or claim 6 characterised in that, in the periodic membrane cleaning operation, in particular by flushing, cleaning with hot lye and sterilisation, the stabilising agent is simultaneously cleaned and regenerated in the installation.

8. A method according to claim 7 characterised in that the stabilising agent together with a cleaning liquid is pumped in circulation on the unfiltrate side through the membranes and in the course thereof cleaned or regenerated.

9. A method of operating an installation according to claim 5 or claim 6 characterised in that for the cleaning or regenerating operation the stabilising agent is conveyed out of the membrane circuit into a cleaning container and treated therein.

10. A method of operating an installation according to claim 5 or claim 6 characterised in that for the cleaning or regenerating operation the stabilising agent is conveyed out of the membrane circuit into the working tank and cleaned and regenerated therein, in particular treated with lye or acid.

## Revendications

1. Procédé de filtration et de stabilisation d'un milieu liquide, en particulier de bière, de vin ou de jus de fruits, lequel milieu (1) contient des matières troubles pouvant être éliminées par filtration, ainsi que (2) des matières tanniques et/ou des matières albuminoïdes qui peuvent être éliminées du milieu par adsorption au moyen d'un stabilisant, caractérisé en ce que le milieu est filtré et stabilisé en une seule phase de procédé, étant précisé que
(a) le milieu est pompé dans le circuit à travers un filtre à membrane à courant transversal en présence d'un stabilisant,
(b) du PVPP et/ou un autre stabilisant faisant simultanément office de stabilisant et d'adjuvant de filtration est ajouté par dosage au milieu, soit avant, soit pendant la circulation dans le filtre à courant transversal, et/ou est introduit dans le filtre à courant transversal avant le démarrage de la filtration,
(c) et que le stabilisant et les matières troubles sont évacués du filtre à courant transversal sous la forme d'un rétentat apte à être régénére.

2. Procédé selon la revendication 1, caractérisé en ce qu'on introduit comme stabilisant du PVPP.

3. Procédé selon la revendication 1, caractérisé en ce qu'on introduit un stabilisant précipitant l'albumine et/ou un agent liant l'albumine, en particulier du gel de silice.

4. Utilisation d'un stabilisant d'une grosseur de particules de 1 µm à 300 µm liant les matières tanniques, notamment utilisation de polyvinyle-polypyrrolidon pour l'ajout au produit à filtrer, comme stabilisant et en même temps comme adjuvant de filtration pour la filtration à membrane à courant transversal de milieux contenant des matières tanniques, en particulier de bière, de vin ou de jus de fruits, dans le domaine de l'ultrafiltration ou de la microfiltration, le produit à filtrer, pratiquement pas filtré, étant filtré et stabilisé en une seule phase de procédé.

5. Installation pour la mise en oeuvre d'un procédé de stabilisation et de filtration selon l'une quelconque des revendications 1 à 4, caractérisée par un filtre à courant transversal (2) comportant une pluralité de membranes de filtration (23) qui sont traversées par le produit à filtrer, un dispositif (26, 27) pour l'évacuation du filtrat, qui entoure les membranes, ainsi qu'un dispositif de pompes et de tuyauteries (4, 5) destiné à transférer par pompage le produit à filtrer dans le circuit à travers les membranes, lequel dispositif est raccordé de part et d'autre aux membranes (22 et 23), caractérisé par au moins un bac de travail (7) à partir duquel une boisson non filtrée et non stabilisée, en particulier de la bière, du vin ou du jus de fruits, peut être directement amenée au filtre à courant transversal (2), et caractérisée par un dispositif (14, 14a) destiné à ajouter du stabilisant et/ou de l'adjuvant de filtration au produit à filtrer.

6. Installation selon la revendication 5, caractérisée en ce que les membranes (23) sont cylindriques et ont un diamètre intérieur libre compris entre 0,5 mm et 30 mm pour la réception du produit à filtrer.

7. Procédé pour l'exploitation d'une installation selon l'une des revendications 5 ou 6, caractérisé en ce que, lors du nettoyage périodique des membranes, en particulier par rinçage, nettoyage avec une lessive chaude et stérilisation, le stabilisant est simultanément épuré et régénéré dans l'installation.

8. Procédé selon la revendication 7, caractérisé en ce que le stabilisant est pompé dans le circuit à travers les membranes avec un liquide de nettoyage, du côté du produit à filtrer, tout en étant épuré ou régénéré.

9. Procédé pour l'exploitation d'une installation selon l'une des revendications 5 ou 6, caractérisé en ce que, pour l'épuration ou la régénération, le stabilisant est évacué du circuit des membranes vers un bac de nettoyage et qu'il est traité dans ce dernier.

10. Procédé pour l'exploitation d'une installation selon l'une des revendications 5 ou 6, caractérisé en ce que, pour l'épuration ou la régénération, le stabilisant est évacué du circuit des membranes vers le bac de travail et qu'il est épuré et régénéré dans ce dernier, en particulier traité avec de la lessive ou de l'acide.
